# EUROPEAN PATENT APPLICATION

(11) **EP 1 967 767 A2**
(43) Date of publication of application: **10.09.2008**
(21) Application number: 08003871.4
(22) Date of filing: 03.03.2008
(51) Int. Cl.: F16H 55/49

(54) **Transmission wheel for motor vehicle alternator**

(30) Priority: 09.03.2007 CN 200720175594 U
(71) Applicant: Auto A.J. Prescrison Inc., Ta An District Taipei City (TW)
(72) Inventor: Tseng, Shan-Hsiung, Cambridge CB21FD (GB)
(74) Representative: Horak, Michael

(57) **Abstract**

A cushion ring (30) is provided between a transmission shaft and a transmission wheel's sleeve (10). The cushion ring (30) has a number of centripetal teeth (31), thereby forming a number of chambers (32) around the cushion ring (30). Inside each chamber (32), there is a slope section slanting (33) towards an adjacent first tooth (31), and there is a spring element (50) pressing a ball (or cylinder) (40) against the slope section (33) and the first tooth (31). The diameter of the ball or cylinder (40) is such that it stands on the slope section (33) to be slightly beyond the teeth and contacts an outside surface of the transmission shaft (60). As such, when the engine is ignited and a jitter causes the transmission shaft (60) to turn in a reversed direction, the balls and cylinders (40) are rolled towards the spring elements (50) and the rotational force is thereby absorbed by the spring elements (50).

## Description

### (a) Technical Field of the Invention

The present invention generally relates to alternators of motor vehicles, and more particularly to a transmission wheel of the alternator capable of absorbing the jitter of engine ignition.

### (b) Description of the Prior Art

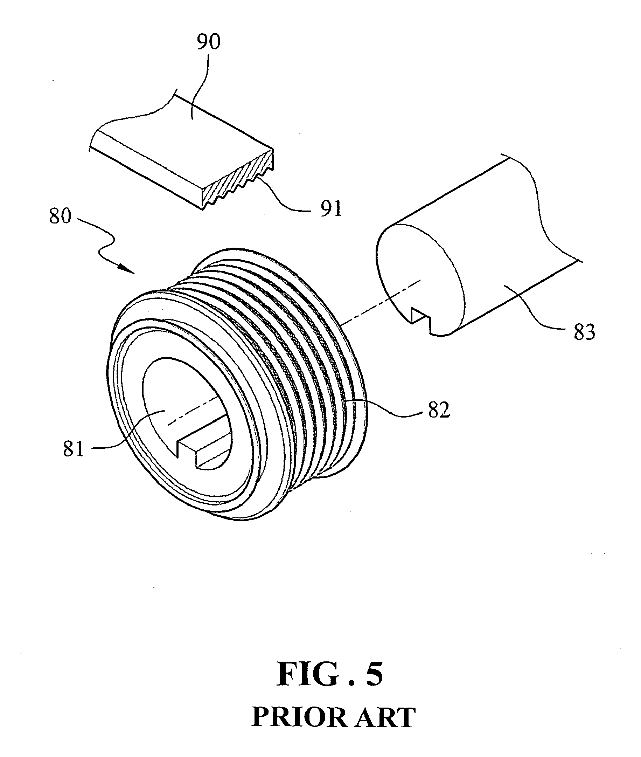

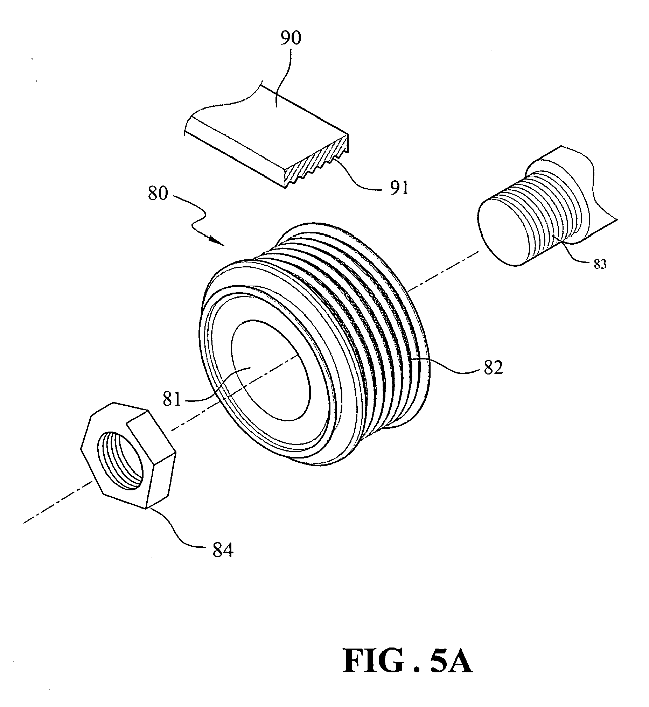

The electrical system of a motor vehicle is mainly powered by a battery and the battery is charged by the alternator of the motor vehicle. The rotor of the alternator is belt-driven via a transmission wheel as shown in FIG 5. As illustrated, a conventional transmission wheel for an alternator mainly contains a sleeve 80 having a center opening 81. The center opening 81 is for the threading of a transmission shaft 83. Along the circumference of the sleeve 80, there are a number of parallel grooves 82. On the other hand, a transmission belt 90 that runs around the sleeve 80 has a cross section with a number of teeth 91 on a side that interfaces with the sleeve 80. The teeth 91 are received by the grooves 82 of sleeve 80, respectively, so as to reliably deliver the driving of the sleeve 80.

FIG 5A shows another conventional transmission wheel. A nut 84 is used to screw onto the transmission shaft 83 so as to lock the sleeve 80 to the transmission shaft 83.

The foregoing design has a number of disadvantages. First, when the engine is ignited, some inevitable jitter is transmitted to the sleeve 80 via the transmission shaft 83. The jitter would cause the sleeve 80 and the belt 90 to turn in a reversed direction before the sleeve 80 spins in a forward direction steadily, and some negative charge is thereby produced. Even though it is a small twist, the operational life span of the belt and the alternator would be adversely affected by the jitter and the negative charge. In addition, as the vibration of the engine is directly transmitted to the transmission wheel 80 and the belt 90 during ignition and running, a louder noise is thereby produced.

### SUMMARY OF THE INVENTION

The primary purpose of the present invention is to provide a novel transmission wheel which is capable of absorbing the jitter during engine ignition.

To absorb the jitter, the present invention provides a cushion ring between the transmission shaft and the sleeve. The cushion ring has a number of centripetal teeth, thereby forming a number of chambers around the cushion ring. Inside each chamber, there is a slope section slanting towards an adjacent first tooth, and there is a spring element pressing a ball (or cylinder) against the slope section and an adjacent tooth. The diameter of the ball or cylinder is such that it stands on the slope section to be slightly beyond the teeth and contacts an outside surface of the transmission shaft.

As such, when the engine is ignited and a jitter causes the transmission shaft to turn in a reversed direction, the balls and cylinders are rolled towards the spring elements. As the rotational force is absorbed by the spring elements, the cushion ring and the sleeve will not spin in the reversed direction.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a perspective diagram showing the various components of a transmission wheel according to an embodiment of the present invention.
FIG 2 is a sectional diagram showing the transmission wheel of FIG 1.
FIG 3 is a schematic diagram showing the transmission wheel of FIG 1 absorbs the jitter.
FIG 4 is a perspective diagram showing the transmission wheel of FIG 1 after it is assembled.
FIG 5 is a perspective diagram showing a conventional transmission wheel.
FIG 5A is a perspective diagram showing another conventional transmission wheel.

### DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

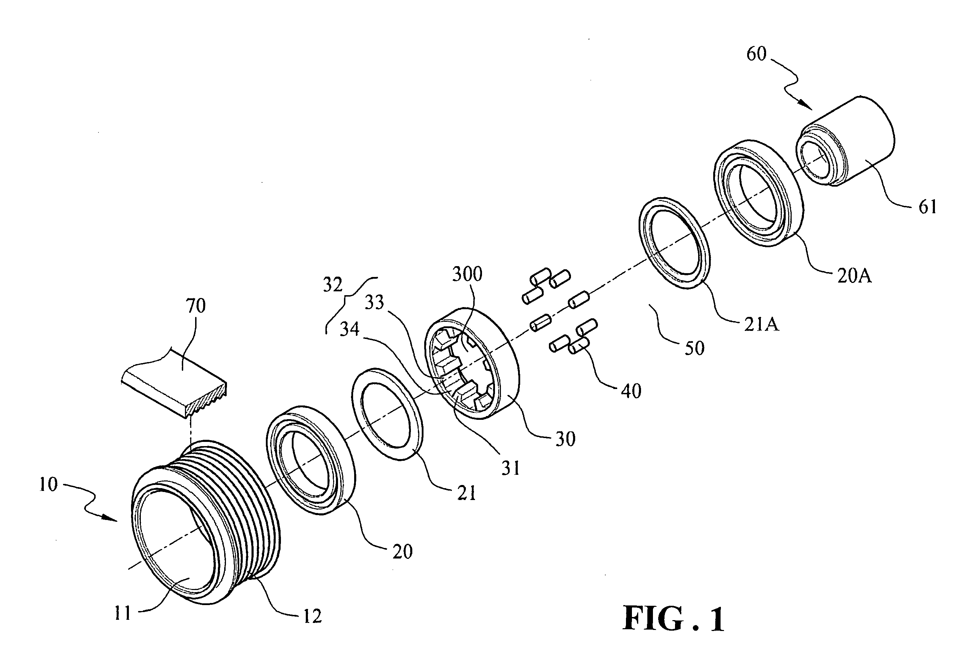

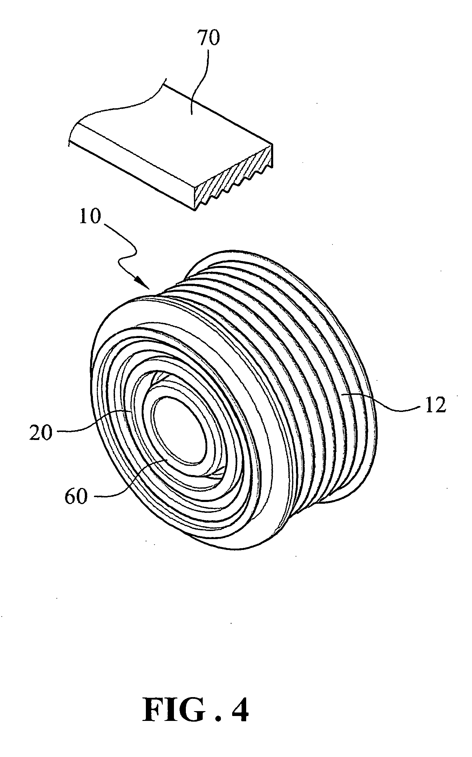

As shown in FIGS. 1 and 4, a transmission wheel according to an embodiment of the present invention contains a sleeve 10. The sleeve 10 has a number of parallel grooves 12 along its circumference for interfacing with a belt 70. The sleeve 10 further has a center opening 11 for accommodating a cushion ring 30.

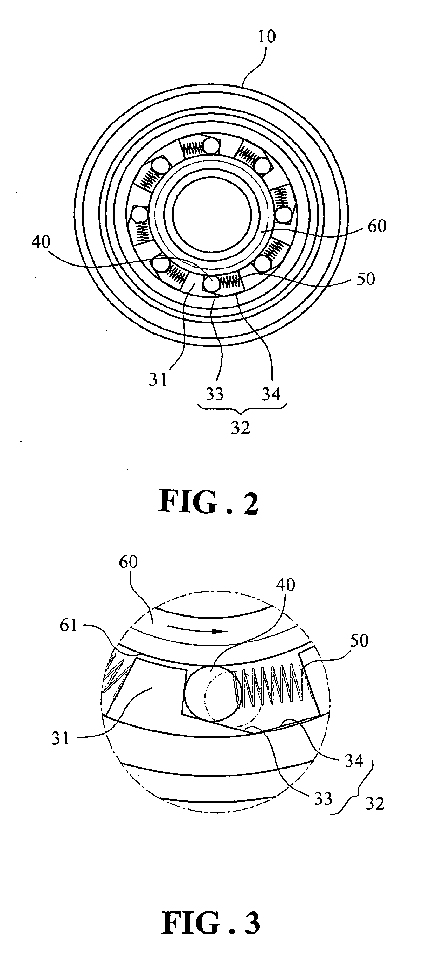

The cushion ring 30 has a number of centripetal teeth 31 extending into an inner space 300 of the cushion ring 30, thereby forming a number of chambers 32 around the cushion ring 30 and partitioning an inner surface of the cushion ring 30 into a number of segments 34. As more clearly shown in FIGS. 2 and 3, each segment 34 has a slope section 33 slanting inward (i.e., to the center of the cushion ring 30) towards an adjacent first tooth 31.

Inside each chamber 32, there is a spring element 50 whose one end is attached to an adjacent second tooth 31 and whose other end presses a ball (or cylinder) 40 against the slope section 33 and the first tooth 31. Please note that the diameter of the ball or cylinder 40 is such that it stands on the slope section 33 to be slightly beyond the teeth 31 into the inner space 300.

The cushion ring 30 is sandwiched between two washers 21 and 21a. The cushion ring 30 and the washers 21, 21a are then further sandwiched between two bearings 20 and 20a. The washers 21, 21a and the bearings 20, 20a are also accommodated in the center opening 11 of the sleeve 10.

A transmission shaft 60 is threaded through the bearings 20, 20a, and the washers 21, 21a, and the cushion ring 30. The diameter of the transmission shaft 60 is such that its outside surface 61a contacts the balls or cylinders 40.

Please note that all balls or cylinders 40 are positioned such that they are pressed by the spring elements 50 in the sleeve 80's normal spinning direction (i.e., the direction that the transmission shaft 60 is turned). Therefore, when the transmission shaft 60 turns, the balls or cylinders 40 are rolled towards the first teeth 31, and the cushion ring 30 and the sleeve 80 are turned in the same direction accordingly.

As shown in FIG 3, when the engine is ignited and a jitter causes the transmission shaft 60 to turn in a reversed direction, the balls and cylinders 40 are rolled towards the spring elements 50. As the rotational force is absorbed by the spring elements 50, the cushion ring 30 and the sleeve 10 will not spin in the reversed direction, and the belt 70 will not drive the alternator (not shown) to produce negative charge. The belt 70 and the alternator therefore would have a longer operational life span according to the present invention.

An additional advantage of the present invention is that, as at least a portion of the vibration from the engine and the transmission shaft 60 is absorbed by the spring elements 50, a less amount of noise would be produced.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. A transmission wheel of an alternator for a motor vehicle, comprising:
a sleeve having a center opening and a plurality of grooves around a circumference of said sleeve that interface a belt of said alternator running around said sleeve;
a cushion ring inside said center opening of said sleeve having a plurality of centripetal teeth and a plurality of chambers therebetween wherein, inside each chamber, there is a slope section slanting inward towards an adjacent first tooth in a normal spinning direction of said sleeve, and a ball or cylinder pressed against said first tooth and said slope section by an end of a spring element whose other end is attached to an adjacent second tooth; and
a transmission shaft threaded through said cushion ring;
wherein the diameter of said balls or cylinders is such that said balls or cylinders stand on said slope sections to be slightly beyond said teeth; and the diameter of said transmission shaft is such that an outside surface of said transmission shaft contacts said balls or cylinders.

2. The transmission wheel according to claim 1, further comprising two bearings inside said center opening of said sleeve wherein said cushion ring is sandwiched between said bearings.

3. The transmission wheel according to claim 2, further comprising two washers wherein each washer is sandwiched between a bearing and said cushion ring.
